# EUROPÄISCHE PATENTSCHRIFT

(11) **EP 3 559 599 B1**
(45) Veröffentlichungstag und Bekanntmachung des Hinweises auf die Patenterteilung: **26.08.2020**
(21) Anmeldenummer: 18733205.1
(22) Anmeldetag: 13.06.2018
(51) Int. Cl.: G01C 21/20, G01C 21/16, G01C 21/32, G01S 19/14, G01S 19/39, G01S 19/49

(54) **VERFAHREN ZUR DATENGENERIERUNG ZUM ERZEUGEN UND AKTUALISIEREN EINER TOPOLOGIEKARTE FÜR MINDESTENS EINEN RAUM MINDESTENS EINES GEBÄUDES**
DATA GENERATION METHOD FOR GENERATING AND UPDATING A TOPOLOGICAL MAP FOR AT LEAST ONE AREA OF AT LEAST ONE BUILDING
PROCÉDÉ DE GÉNÉRATION DE DONNÉES SERVANT À ÉTABLIR ET ACTUALISER UNE CARTE TOPOLOGIQUE POUR AU MOINS UNE ZONE D'UN BÂTIMENT

(30) Priorität: 10.07.2017 DE 102017211712
(43) Veröffentlichungstag der Anmeldung: 30.10.2019
(73) Patentinhaber: Audi AG, 85045 Ingolstadt (DE)
(72) Erfinder: HAUBNER, Florian, 97348 Willanzheim (DE)
(86) Internationale Anmeldenummer: PCT/EP2018/065660
(87) Internationale Veröffentlichungsnummer: WO 2019/011564

(56) Entgegenhaltungen:
- EP-A1- 3 136 054
- US-A1- 2013 297 198
- US-A1- 2017 131 103

## Beschreibung

Die vorliegende Erfindung betrifft ein Verfahren zur Datengenerierung zum Erzeugen und Aktualisieren mindestens einer Topologiekarte mindestens eines Raumes in mindestens einem Gebäude in einer Fahrzeugumgebung durch mindestens ein Fahrzeug, bei dem eine Eigenbewegungsschätzung ohne GPS-Empfang durch nachfolgend vorhandene GPS-Daten korrigiert und für mindestens eine Topologiekarte für mindestens einen Raum mindestens eines Gebäudes verwendet wird.

Aktuell werden zur Erzeugung von Topologiekarten bzw. zur Aktualisierung von Topologiekarten vor allem GPS-Daten verwendet. Diese Daten beinhalten aufeinanderfolgende GPS-Positionen, aus denen automatisch Wegenetze außerhalb von Gebäuden erzeugt und aktualisiert werden können. Diese Technologie kann wegen fehlendem GPS-Signal und häufigerer Manöver innerhalb von Gebäuden, wie beispielsweise Parkhäusern, nicht verwendet werden, da eine Satellitenverbindung notwendig ist.

Topologiekarten von Gebäuden werden heute üblicherweise aus Orientierungsplänen digitalisiert. Diese weisen jedoch häufig eine hohe Ungenauigkeit, fehlende Aktualität und Skalenfehler auf. Weiterhin können Wechsel zwischen Stockwerken, Fahrtrichtungsrestriktionen und dergleichen hauptsächlich manuell in Topologiekarten implementiert werden.

Eine weitere Möglichkeit zum Erstellen von Topologiekarten für Gebäude-Innenräume ist die manuelle Einmessung mit Laserscannern und eine spätere manuelle Nachverarbeitung der Daten. Diese Laserscann-Verfahren sind zwar präzise jedoch auch teuer und zeitintensiv. Problematisch kann dabei eine regelmäßige Aktualisierung der Topologiekarten sein.

DE 10 2015 203 016 A1 offenbart ein Verfahren zur Kartierung einer Trajektorie relativ zu ermittelten markanten Landmarken. Die Landmarken werden durch zusätzliche Sensoren erkannt.

EP 3 136 128 A1 beschreibt ein Verfahren zum automatischen Ermitteln einer Fahrbahnform anhand von crowd-basierten Trajektoriendaten. Bei verschiedenen Trajektoriendaten werden anhand von Rotations- und Translationsinformationen Übereinstimmungen gesucht und anhand der Übereinstimmungen die Trajektoriendaten zusammengefügt.

WO 2014/026338 A1 offenbart ein Verfahren zum Erstellen von Innenraum-Karten aus Daten von Eigenbewegungsschätzungen mobiler Endgeräte.

EP 3 136 054 A1 betrifft ein Verfahren, bei dem eine Vorrichtung mindestens einen Satz von Sensordaten von mindestens einem mobilen Gerät empfängt. Die Sensordaten wurden an einem bestimmten Ort gemessen und umfassen mindestens bewegungsbezogene Sensordaten. Die Vorrichtung wählt einen Satz von Parameterwerten für ein parametrisches Standortmodell aus mehreren möglichen Sätzen von Parameterwerten aus. Der Satz von Parameterwerten wird ausgewählt, welcher die höchste Wahrscheinlichkeit aufweist, dass das mit dem Satz von Parameterwerten konfigurierte parametrische Standortmodell den bestimmten Standort im Hinblick auf den empfangenen mindestens einen Satz von Sensordaten korrekt darstellt.

US 2013/297198 A1 offenbart ein Verfahren und ein System zum Erzeugen von Kartendaten, wobei die Kartendaten das Innere eines Gebäudes und/ oder eines umschlossenen und/oder überdachten Bereichs darstellen. Standortbezogene Daten werden zunächst von mehreren Mobilgeräten unter Verwendung mindestens eines Nicht-GPS-Navigationssensors und mindestens eines GPS-Sensors in jedem Mobilgerät erzeugt. Die ortsbezogenen Daten werden dann aggregiert und Kartendaten aus den aggregierten Daten bestimmt.

US 2017/131103 A1 stellt eine Informationsverarbeitungsvorrichtung bereit, die eine Verarbeitungsschaltung umfasst, die konfiguriert ist, eine Aktionserkennungsinformation zu empfangen. Diese wird auf der Grundlage von Erfassungsinformationen eines Benutzers bestimmt, die einer Positionsinformation des Benutzers zugeordnet sind. Die Aktionserkennungsinformationen zeigt an, dass eine auf die Struktur oder Ausstattung eines Gebäudes bezogene Aktion des Benutzers aufgetreten ist, und verknüpft die Struktur oder Ausstattung des Gebäudes mit der Positionsinformation auf der Grundlage der Aktionserkennungsinformation.

Der Erfindung liegt die Aufgabe zugrunde, ein Verfahren zum automatisierten Erstellen von Topologiekarten von Räumen durch mindestens ein Fahrzeug vorzuschlagen.

Ein Gegenstand der Erfindung ist ein Verfahren zur Datengenerierung zum Erzeugen und Aktualisieren mindestens einer Topologiekarte mindestens eines Raumes in mindestens einem Gebäude in einer Fahrzeugumgebung durch mindestens ein Fahrzeug. Dabei wird eine Position mindestens eines Fahrzeugs mit aktuellen GPS-Daten vor einer Einfahrt in das Gebäude bestimmt. Es folgt eine Schätzung der Trajektorie des mindestens einen Fahrzeugs in mindestens einem Raum des mindestens einen Gebäudes durch eine auf Daten von fahrzeuginternen Beschleunigungs-Sensoren, Drehratensensoren und Odometern basierende Eigenbewegungsschätzung des mindestens eines Fahrzeugs. Anschließend wird beim Verlassen des mindestens einen Gebäudes durch das mindestens eine Fahrzeug durch einen Abgleich mit aktuellen GPS-Daten ein Eigenbewegungsfehler bestimmt. Eine geschätzte Trajektorie des mindestens einen Fahrzeugs kann dann um den durch dauerhaftes Integrieren von Beschleunigungen, Drehraten und Odometriedaten verursachten Eigenbewegungsfehler korrigiert werden. Die Korrektur erfolgt mit Hilfe eines Fehlermodells, das die einzelnen Teilfehler entlang der Trajektorie rückwirkend abhängig von den durchgeführten Fahrmanövern ermittelt und anschließend die Trajektorie basierend auf den ermittelten Teilfehlern sukzessive korrigiert.

Vor der Einfahrt in das Parkhaus kann die Position des Fahrzeugs durch die Nutzung von GPS-Daten bestimmt werden. Hierdurch kann eine Position des Fahrzeugs bei der Einfahrt in das Gebäude ermittelt werden. Beim Einfahren in das Parkhaus degradiert die ermittelte GPS-Position jedoch aufgrund von Abschirmungen der GPS-Signale innerhalb des Gebäudes. Eine weitere Bestimmung der Position innerhalb des Gebäudes durch GPS ist meist nur sporadisch oder gar nicht möglich. Da eine zuverlässige Nutzung von GPS in einem Gebäude zur Positionsbestimmung entfällt, hat das Fahrzeug in einem Gebäude nur noch eine Eigenbewegungsschätzung zur Verfügung. Die Eigenbewegungsschätzung unterliegt jedoch Ungenauigkeiten, die zunehmend ansteigen. Üblicherweise weist das Fahrzeug nach einer Fahrt durch das Gebäude, beispielsweise ein Parkhaus, einen Heading- und Positionsfehler auf. Erfindungsgemäß werden im Fahrzeug vorhandene Beschleunigungssensoren, Drehratensensoren und Odometer verwendet, um eine Position des Fahrzeugs ausgehend von den zuletzt empfangenen GPS-Daten zu ermitteln. Sobald ein GPS-Signal wieder in ausreichender Qualität verfügbar ist, wird der durch dauerhaftes Integrieren von Beschleunigungen, Drehraten und Odometriedaten verursachte Eigenbewegungsfehler im Parkhaus bestimmt. Hierfür wird eine durch die Eigenbewegungsschätzung ermittelte Position des Fahrzeugs bei der Ausfahrt aus dem Parkhaus mit aktuellen GPS-Daten nach der Ausfahrt verglichen. Die innerhalb des Parkhauses ermittelte Trajektorie oder Innenraum-Trajektorie wird anschließend entsprechend dem Eigenbewegungsfehler korrigiert, sodass mit Hilfe der korrigierten Trajektorie innerhalb des Parkhauses zumindest ein Teilbereich des Raumes des Gebäudes erfassbar ist. Insbesondere können hierdurch die befahrbaren Wege innerhalb von Gebäuden, wie beispielsweise Parkhäusern oder Garagen ermittelt werden. Hierfür sind geringe technische Anforderungen an die Sensorik des Fahrzeugs notwendig. Insbesondere werden bei vielen Fahrzeugen keine zusätzlichen Sensoren benötigt.

Nach einer Ausführungsform wird die geschätzte Trajektorie fahrzeugintern korrigiert und eine korrigierte Trajektorie an eine externe Servereinheit übertragen. Die ermittelten GPS-Daten und Daten der Eigenbewegungsschätzung können kontinuierlich oder in bestimmten zeitlichen Abständen von dem mindestens einen Fahrzeug an die externe Servereinheit übertragen werden. Die externe Servereinheit kann beispielsweise eine Cloud sein. Aus den übertragenen Daten kann die externe Servereinheit die bereits durch das mindestens eine Fahrzeug korrigierten Trajektorien innerhalb des Gebäudes übernehmen. Da eine externe Servereinheit auch höhere Rechenleistungen aufweisen kann als eine fahrzeuginterne Recheneinheit, können Daten auch von vielen Fahrzeugen gleichzeitig zum schnellen Erzeugen oder Aktualisieren mindestens einer Karte berechnet werden. Eine aus den gesammelten Daten im Backend bzw. der externen Servereinheit automatisch generierte Karte kann anschließend anderen Fahrzeugen bereitgestellt werden. Hierdurch können beispielsweise erweiterte Navigations- und Assistenz-Funktionen in einem Parkhaus bereitgestellt werden.

Nach einer weiteren Ausführungsform werden vom mindestens einem Fahrzeug ermittelte GPS-Daten und Eigenbewegungsdaten an die externe Servereinheit übertragen und die geschätzte Trajektorie wird in der externen Servereinheit korrigiert. Im Backend bzw. in der externen Servereinheit können mehrere Trajektorien von einem oder mehreren Fahrzeugen gesammelt und zunächst anhand der ermittelten GPS-Positionen außerhalb des Parkhauses zueinander ausgerichtet werden. Aufgrund der üblicherweise höheren Rechenleistungen von externen Servereinheiten gegenüber fahrzeuginternen Steuergeräten können die übertragenen Daten schneller und mit komplexeren Algorithmen weiterverarbeitet werden.

Gemäß eines weiteren Ausführungsbeispiels ist das Gebäude ein Parkhaus, wobei Abschnitte und Räume des Parkhauses durch die Eigenbewegungsschätzung mindestens eines Fahrzeugs erfasst werden. Es können beispielsweise Rampen und markante von mindestens einem Fahrzeug umfahrene Punkte in dem Gebäude durch entsprechend ausgeprägte Trajektorien ermittelt werden. Hierdurch kann eine genaue Topologiekarte des Gebäudes erzeugt und kontinuierlich aktualisiert werden. Auch können nachträgliche Änderungen, wie beispielsweise Bauarbeiten oder dauerhafte Hindernisse, im Rahmen von Aktualisierungen der Daten und der daraus erzeugten Karte des Gebäudes berücksichtigt werden.

Nach einer weiteren Ausführungsform wird mindestens eine Ebene des Gebäudes durch Eigenbewegungsschätzung und/oder GPS-Daten erfasst. Es können eine oder mehrere Ebenen eines Gebäudes erfasst werden. Beispielsweise kann durch Erkennen einer Steigung bzw. einer Rampe eine Höhenänderung registriert werden. Hierdurch können auch mehrere Stockwerke bzw. Ebenen, beispielsweise einer Parkgarage, kartografisch erfasst werden. Beispielsweise können hierfür 3-Achsen-Beschleunigungssensoren verwendet werden.

Nach einem weiteren Ausführungsbeispiel wird mindestens ein strukturelles Merkmal des Gebäudes durch die Eigenbewegungsschätzung des Fahrzeugs erfasst. Es können markante Fahrmanöver, beispielsweise aufgrund von Rampen mit signifikanten Nick-Winkel Veränderungen, kombiniert mit anschließender Gier-Winkel-Veränderung innerhalb der Trajektorie ermittelt werden. Anhang derartig markanter Bereiche der Trajektorie kann eine Feinausrichtung von durch unterschiedliche Fahrzeuge ermittelten unterschiedlichen Trajektorien zueinander durchgeführt werden. Hierdurch kann aus mehreren unabhängig voneinander ermittelten Trajektorien eine mögliche Gesamttrajektorie berechnet werden. Insbesondere können aus mehreren, durch Fahrzeuge befahrenen, Teilabschnitten des Gebäudes ein Gesamtbild des Gebäudes aus mehreren Trajektorien bestimmt werden.

Nach einer weiteren Ausführungsform erfolgt die Eigenbewegungsschätzung des Fahrzeugs basierend auf einem Trägheitsnavigationssystem und/oder einem Odometer und/oder einem GPS-Navigationssystem. Hierdurch können alle im Fahrzeug verfügbaren Sensoren zum Erfassen von Daten verwendet werden, die im Rahmen einer nachträglichen Analyse zu einer Trajektorie umgerechnet werden können. Insbesondere sind diese Sensoren in vielen aktuellen Fahrzeugen bereits integriert, sodass kein nachträglicher Einbau weiterer Sensorik notwendig ist. Hierdurch können die Kosten für die Erzeugung und Aktualisierung der Topologiekarten reduziert werden.

Nach einem weiteren Ausführungsbeispiel wird mindestens eine Karte aus mehreren Durchfahrten durch mindestens einen Raum mindestens eines Gebäudes generiert oder aktualisiert. Im Rahmen einer Clusteranalyse können mehrere Trajektorien berücksichtigt werden. Hierdurch kann eine Genauigkeit der mindestens einen Karte erhöht werden. Es können beispielsweise markante Punkte des Raums in mehreren unabhängig voneinander ermittelten Trajektorien gesucht und anhand dieser Punkte die Trajektorien zueinander ausgerichtet und verbunden werden. So können beispielsweise befahrbare Straßen innerhalb von Gebäuden ermittelt und bereitgestellt werden.

Erfindungsgemäß wird mindestens eine durch Eigenbewegungsschätzung erstellte Trajektorie des mindestens einen Fahrzeugs durch ein Fehlermodel um den Eigenbewegungsfehler korrigiert. Der Eigenbewegungsfehler kann dabei mit Hilfe eines Fehlermodells von einer gesamten Trajektorie subtrahiert werden. Die einzelnen Teilfehler entlang der Trajektorie werden rückwirkend abhängig von den durchgeführten Fahrmanövern ermittelt. Anschließend wird die Trajektorie basierend auf den ermittelten Teilfehlern sukzessive korrigiert. Das Fehlermodel kann kontinuierlich optimiert und verbessert werden und auch nachträglich auf bereits korrigierte Trajektorien erneut angewandt werden. Hierdurch können die bereits gewonnenen Daten optimal genutzt und aktualisiert werden. Nach einer weiteren Ausführungsform wird durch mindestens einen optischen und/oder elektromagnetischen Sensor mindestens eine Information für die mindestens eine Karte ermittelt. Von den Fahrzeugen können durch zusätzliche Sensorik entlang der Trajektorie auch weitere Informationen wie beispielsweise Parkplätze, Engstellen, Rampen, Verkehrszeichen usw. erfasst und in Topologiekarten eingetragen werden, wodurch dem Nutzer oder einem Fahrassistenzsystem zusätzliche Informationen zur Verfügung gestellt werden können. Beispielsweise können auch Verkehrsschilder und Hinweisschilder ermittelt und positionsgenau in die mindestens eine Karte integriert werden.

Nach einer weiteren Ausführungsform wird mindestens ein Parkplatz in dem mindestens einem Raum des mindestens einen Gebäudes ermittelt. Durch das erfindungsgemäße Verfahren können Parkvorgänge und Wendemanöver innerhalb des Gebäudes erkannt und registriert werden. Beispielsweise kann durch ein definiertes zeitliches Abstellen des Fahrzeugs und eine fehlende Bewegungsschätzung ein Parkplatz identifiziert und auf der Karte als ein möglicher Parkplatz markiert werden. Hierdurch können parallel und quer zur Fahrbahn orientierte Parkplätze ermittelt werden. Es können somit anhand der Trajektorien mehrerer Fahrzeuge nacheinander alle Parkplätze eines Parkhauses oder einer Parkgarage ermittelt und im Rahmen einer Kartenerstellung an die externe Servereinheit übertragen werden.

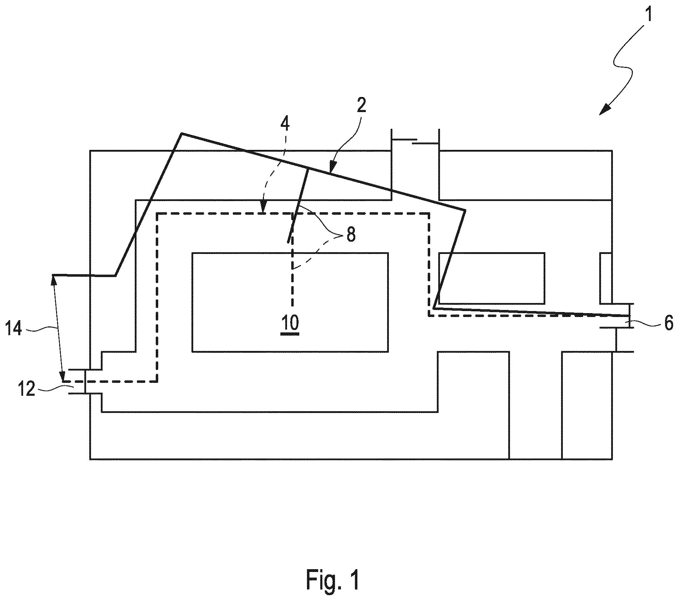

Die Erfindung ist anhand von einer Ausführungsform in der Zeichnung schematisch verdeutlicht und wird unter Bezugnahme auf die Zeichnung weiter beschrieben. Figur 1 zeigt eine Draufsicht auf eine schematische Trajektorie eines Fahrzeugs zum Verdeutlichen des erfindungsgemäßen Verfahrens.

Figur 1 zeigt insbesondere einen Grundriss einer Parkgarage 1. In dem Grundriss der Parkgarage 1 ist eine schematische Draufsicht auf eine Trajektorie 2, 4 eines Fahrzeugs dargestellt. Bei einer Einfahrt 6 in die Parkgarage 1 kann ein Fahrzeug ein letztes Mal ein aktuelles GPS-Signal erhalten und somit seine Position im Rahmen der GPS-Genauigkeit relativ genau ermitteln. Nach der Einfahrt in die Parkgarage 1 erfolgt eine Positionsermittlung des Fahrzeugs anhand der eigenen Sensorik des Fahrzeugs. Erfindungsgemäß werden fahrzeuginterne Beschleunigungs-sensoren, Drehdatensensoren und Odometer für eine Eigenbewegungsschätzung verwendet. Die durch eine Eigenbewegungsschätzung ermittelte Trajektorie 2 weist hierbei einen kontinuierlich ansteigenden Fehler auf und weicht mit steigender Strecke innerhalb der Parkgarage 1 zunehmend stärker von einer realen Trajektorie 4 ab. Es kann hierbei ein Parkvorgang 8 und damit ein Parkplatz 10 identifiziert werden. Das Fahrzeug hat dabei einen Richtungswechsel durchgeführt und für eine definierte Zeitspanne keine Beschleunigungen erfahren. Verlässt das Fahrzeug die Parkgarage 1 durch eine Ausfahrt 12 kann das Fahrzeug erneut ein aktuelles GPS-Signal empfangen. Hierbei kann ein Fehler 14 ermittelt werden, wenn die durch Eigenbewegungsschätzung ermittelte Position des Fahrzeugs bei der Ausfahrt 14 von der GPS-Position des Fahrzeugs abweicht. Anhand der Abweichung bzw. des Fehlers 14 kann die durch Eigenbewegungsschätzung des Fahrzeugs ermittelte Trajektorie 2 rückwirkend zu einer korrigierten Trajektorie 4 korrigiert werden. Anhand mehrerer korrigierter Trajektorien 4 von unterschiedlichen Fahrzeugen oder von verschiedenen Durchfahrten eines Fahrzeugs können alle befahrbaren Routen und Parkplätze 10 der Parkgarage 1 ermittelt und in Form einer Topologiekarte gespeichert werden.

Im Folgenden werden Verfahrensschritte des erfindungsgemäßen Verfahrens zur Datengenerierung gemäß einer Ausführungsform näher erläutert. In einem ersten Schritt werden Daten von mindestens einem Fahrzeug gesammelt. Insbesondere können dies Trajektorien mehrerer Fahrzeuge mit Daten zu den erfassten Nick- und Gier-Winkeln sowie GPS-Daten sein, die an eine externe Servereinheit übertragen werden. In einem weiteren Schritt werden die Daten verarbeitet. Es können beispielsweise Rampen ermittelt bzw. extrahiert und Höhenkorrekturen durchgeführt werden. Hierdurch kann auch ein Parkhaus mit mehreren Ebenen erfasst werden. Die Rampen können beispielsweise für eine Clusteranalyse verwendet werden und als markante Punkte zum Verbinden mehrerer Trajektorien genutzt werden. Hierfür können die Rampen oder die Rampenmittelpunkte mehrerer Trajektorien überlagert werden. Eine Rampenhöhe kann beispielsweise im Rahmen einer Kleinster-Quadrate-Anpassung aus mehreren Trajektorien erfolgen. Hierzu können auch weitere Parameter, wie beispielsweise Steigungswinkel, herangezogen werden. Die jeweiligen Trajektorien können unabhängig voneinander an die jeweiligen Rampenhöhen oder Ebenenhöhen angepasst bzw. korrigiert werden. In einem weiteren Schritt können die korrigierten Trajektorien, beispielsweise durch eine Cluster-Analyse, verbunden werden. Hierbei können beispielsweise Parkvorgänge und Wendemanöver berücksichtigt werden. Bei der Cluster-Analyse können unterschiedliche Merkmale eine individuelle Gewichtung aufweisen. Beispielsweise können identifizierte Parkplätze stärker gewichtet werden als identifizierte temporäre Hindernisse, wie beispielsweise falsch parkende Fahrzeuge. Des Weiteren kann eine Gewichtung von Merkmalen der Cluster-Analyse auch auf verschiedene Richtungen, wie x-, y-, z-Ebene sowie auf Nick- und Gierwinkel und auf eine Fahrtrichtung angewandt werden.

### Bezugszeichenliste

- 1: Parkgarage
- 2: durch Eigenbewegungsschätzung ermittelte Trajektorie
- 4: korrigierte Trajektorie
- 6: Einfahrt
- 8: Parkvorgang
- 10: Parkplatz
- 12: Ausfahrt
- 14: Fehler / Abweichung

## Patentansprüche

1. Verfahren zur Datengenerierung zum Erzeugen und Aktualisieren mindestens einer Topologiekarte mindestens eines Raumes (1) in mindestens einem Gebäude in einer Fahrzeugumgebung durch mindestens ein Fahrzeug, aufweisend die folgenden Schritte:
- Bestimmen einer Position mindestens eines Fahrzeugs mit aktuellen GPS-Daten vor einer Einfahrt (6) in das Gebäude,
- Schätzung einer Trajektorie des mindestens einen Fahrzeugs in mindestens einem Raum (1) des mindestens einen Gebäudes durch eine auf Daten von fahrzeuginternen Beschleunigungs-Sensoren, Drehratensensoren und Odometern basierende Eigenbewegungsschätzung des mindestens eines Fahrzeugs,
- Bestimmen eines Eigenbewegungsfehlers (14) beim Verlassen (12) des mindestens einen Gebäudes durch das mindestens eine Fahrzeug durch einen Abgleich mit aktuellen GPS-Daten, **gekennzeichnet durch** den folgenden Schritt:
- Korrigieren einer geschätzten Trajektorie (2) des mindestens einen Fahrzeugs um den durch dauerhaftes Integrieren von Beschleunigungen, Drehraten und Odometriedaten verursachten Eigenbewegungsfehler (14) mit Hilfe eines Fehlermodells, das die einzelnen Teilfehler entlang der Trajektorie rückwirkend abhängig von den durchgeführten Fahrmanövern ermittelt und anschließend die Trajektorie basierend auf den ermittelten Teilfehlern sukzessive korrigiert.

2. Verfahren nach Anspruch 1, wobei die geschätzte Trajektorie (2) fahrzeugintern korrigiert wird und eine korrigierte Trajektorie (4) von dem mindestens einen Fahrzeug an eine externe Servereinheit übertragen wird.

3. Verfahren nach Anspruch 1, wobei GPS-Daten und Eigenbewegungsdaten von dem mindestens einen Fahrzeug an die externe Servereinheit übertragen werden und die geschätzte Trajektorie (2) in der externen Servereinheit korrigiert wird.

4. Verfahren nach einem der Ansprüche 1 bis 3, wobei das Gebäude ein Parkhaus (1) ist und Abschnitte und Räume des Parkhauses (1) durch die Eigenbewegungsschätzung erfasst werden.

5. Verfahren nach einem der Ansprüche 1 bis 4, wobei mindestens eine Ebene des Gebäudes durch Eigenbewegungsschätzung und/oder GPS-Daten erfasst wird.

6. Verfahren nach einem der Ansprüche 1 bis 5, wobei mindestens ein strukturelles Merkmal des Gebäudes durch die Eigenbewegungsschätzung des Fahrzeugs erfasst wird.

7. Verfahren nach einem der Ansprüche 1 bis 6, wobei mindestens eine Topologiekarte aus mehreren Durchfahrten durch mindestens einen Raum des mindestens einen Gebäudes (1) generiert oder aktualisiert wird.

8. Verfahren nach einem der Ansprüche 1 bis 7, wobei durch mindestens einen optischen und/oder elektromagnetischen Sensor mindestens eine Information für die mindestens eine Topologiekarte ermittelt wird.

9. Verfahren nach einem der Ansprüche 1 bis 8, wobei mindestens ein Parkplatz (10) in dem mindestens einem Raum (1) des mindestens einen Gebäudes durch ein definiertes zeitliches Abstellen des Fahrzeugs und eine fehlende Bewegungsschätzung ermittelt wird.

## Claims

1. Method for generating data for producing and updating at least one topology map of at least one room (1) in at least one building in an area surrounding a vehicle by means of at least one vehicle, having the following steps:
- determining a position of at least one vehicle with current GPS data in front of an entrance (6) to the building,
- assessing a trajectory of the at least one vehicle in at least one room (1) of the at least one building by means of a motion characteristic assessment of the at least one vehicle based on data from vehicle internal acceleration sensors, yaw rate sensors and odometers,
- determining a motion characteristic error (14) when the at least one vehicle leaves (12) the at least one building by a comparison with current GPS data, **characterised by** the following step:
- correcting an estimated trajectory (2) of the at least one vehicle by the motion characteristic error (14) caused by permanently integrating accelerations, yaw rates and odometer data by means of an error model which retroactively determines individual partial errors along the trajectory as a function of driving maneuvers performed, and subsequently successively corrects the trajectory based on the determined partial errors.

2. Method according to claim 1, wherein the estimated trajectory (2) is corrected internally in the vehicle and a corrected trajectory (4) is transmitted from the at least one vehicle to an external server unit.

3. Method according to claim 1, wherein GPS data and motion characteristic data of the at least one vehicle are transmitted to the external server unit and the estimated trajectory (2) is corrected in the external server unit.

4. Method according to any of claims 1 to 3, wherein the building is a parking garage (1) and sections and rooms of the parking garage (1) are detected by the assessment of motion characteristics.

5. Method according to any of claims 1 to 4, wherein at least one level of the building is detected based on the assessment of motion characteristics and/or GPS data.

6. Method according to any of claims 1 to 5, wherein at least one structural feature of the building is detected based on the assessment of motion characteristics of the vehicle.

7. Method according to any of claims 1 to 6, wherein at least one topology map is generated or updated from a plurality of passes through at least one room of the at least one building (1).

8. Method according to any of claims 1 to 7, wherein at least one piece of information for the at least one topological map is determined by at least one optical and/or electromagnetic sensor.

9. Method according to any of claims 1 to 8, wherein at least one parking space (10) in the at least one room (1) of the at least one building is determined by a defined time of parking the vehicle and a missing motion estimation.

## Revendications

1. Procédé de génération de données servant à établir et actualiser au moins une carte topologique d'au moins un espace (1) dans au moins un bâtiment dans un environnement de véhicule par au moins un véhicule, comprenant les étapes suivantes :
- Détermination d'une position d'au moins un véhicule à l'aide des données GPS courantes avant une entrée (6) dans le bâtiment,
- Estimation d'une trajectoire du au moins un véhicule dans au moins un espace (1) du au moins un bâtiment par une estimation de mouvement propre basée sur des données de capteurs d'accélération, des capteurs de vitesses et d'odomètres internes au véhicule du au moins un véhicule,
- Détermination d'une erreur de mouvement propre (14) en quittant (12) le au moins un bâtiment par le au moins un véhicule par une comparaison avec des données GPS courantes, **caractérisée par** l'étape suivante :
- Correction d'une trajectoire estimée (2) du au moins un véhicule au niveau de l'erreur de mouvement propre (14) provoquée par l'intégration durable des données d'accélération, de vitesses et d'odométrie à l'aide d'un modèle d'erreur qui détermine les différentes erreurs partielles le long de la trajectoire de manière rétroactive en fonction des manœuvres de conduite réalisées, et corrige ensuite successivement la trajectoire sur la base des erreurs partielles déterminées.

2. Procédé selon la revendication 1, dans lequel la trajectoire estimée (2) est corrigée de manière interne au véhicule et une trajectoire corrigée (4) est transmise par le au moins un véhicule à une unité de serveur externe.

3. Procédé selon la revendication 1, dans lequel des données GPS et des données de mouvement propre sont transmises par le au moins un véhicule à l'unité de serveur externe et la trajectoire estimée (2) est corrigée dans l'unité de serveur externe.

4. Procédé selon l'une quelconque des revendications 1 à 3, dans lequel le bâtiment est un parking (1) et des zones et locaux du parking (1) sont détectés par l'estimation de mouvement propre.

5. Procédé selon l'une quelconque des revendications 1 à 4, dans lequel au moins un plan du bâtiment est détecté par l'estimation de mouvement propre et/ou des données GPS.

6. Procédé selon l'une quelconque des revendications 1 à 5, dans lequel au moins une caractéristique structurelle du bâtiment est détectée par l'estimation de mouvement propre du véhicule.

7. Procédé selon l'une quelconque des revendications 1 à 6, dans lequel au moins une carte topologique est générée ou actualisée à partir de plusieurs passages à travers au moins un espace du au moins un bâtiment (1).

8. Procédé selon l'une quelconque des revendications 1 à 7, dans lequel au moins une information pour la au moins une carte topologique est déterminée par au moins un capteur optique et/ou électromagnétique.

9. Procédé selon l'une quelconque des revendications 1 à 8, dans lequel au moins un emplacement de stationnement (10) dans le au moins un espace (1) du au moins un bâtiment est déterminé par un stationnement temporel défini du véhicule et un défaut d'estimation de mouvement.
